# EUROPÄISCHE PATENTANMELDUNG

(11) **EP 0 857 995 A1**
(43) Veröffentlichungstag der Anmeldung: **12.08.1998**
(21) Anmeldenummer: 98101988.8
(22) Anmeldetag: 05.02.1998
(51) Int. Cl.: G02F 1/139, G02F 1/1335

(54) **Anzeigeeinrichtung mit einer Flüssigkristallzelle**

(30) Priorität: 07.02.1997 DE 19704586
(71) Anmelder: Mannesmann VDO Aktiengesellschaft, 60388 Frankfurt/M. (DE)
(72) Erfinder: Noll, Heinrich, Dr., 64823 Gross-Umstadt (DE); Schaper, Thomas, 64850 Schaafheim (DE)
(74) Vertreter: Klein, Thomas, Dipl.-Ing.

(57) **Zusammenfassung**

Die Erfindung betrifft eine Anzeigeeinrichtung (1) mit einer durchleuchtbaren STN-Flüssigkristallzelle (2), deren Flüssigkristallsubstanz (3) einen Farbstoff enthält und die in Anzeigebereichen bezüglich ihres Transmissionsvermögens schaltbar ist, und mit einem auf der einem Beobachter abgewandten Seite der Flüssigkristallzelle angeordneten optischen Element (4).

Um eine einheitliche Hintergrundfarbe einzelner Anzeigeelemente in der Anzeigeeinrichtung zu erhalten, schlägt die Erfindung vor, daß das optische Element ein Farbfilter ist und derart mit einem Farbstoff versehen ist, daß auf die Flüssigkristallzelle beobachterseitig einfallendes Licht (5) so von dem Farbstoff der Flüssigkristallzelle in einer ersten (7) und von dem Farbstoff des Farbfilters in einer zweiten Farbe (6) reflektiert wird, daß das Mischlicht aus den jeweils reflektierten Lichtanteilen eine von der ersten und von der zweiten Farbe verschiedene dritte Farbe aufweist.

## Beschreibung

Die Erfindung betrifft eine Anzeigeeinrichtung mit einer durchleuchtbaren STN (= Super Twisted Nematic)-Flüssigkristallzelle, deren Flüssigkristallsubstanz einen Farbstoff enthält und die in Anzeigebereichen bezüglich ihres Transmissionsvermögens schaltbar ist, und mit einem auf der einem Beobachter abgewandten Seite der Flüssigkristallzelle angeordneten optischen Element.

Derartige Anzeigeeinrichtungen mit einer STN-Flüssigkristallzelle sind z. B. in Instrumententafeln von Fahrzeugen, als Informations- oder Schautafeln oder auch allgemein in Maschinensteueranlagen bekannt. Da sich die Farbe solcher STN-Flüssigkristallzellen je nach Betrachtungswinkel ändert und sich auch im nichtangesteuerten Zustand der Zelle infolge einer Änderung des Brechungsindexes der Flüssigkristallsubstanz bei Temperaturschwankungen Farbänderungen ergeben, die zu unerwünschten Beeinträchtigungen der optischen Wahrnehmung führen, ist es üblich, die Flüssigkristallsubstanz der STN-Flüssigkristallzellen mit z. B. blauem Farbstoff einzufärben. Eine solche Einfärbung führt zu einem Erscheinungsbild der Flüssigkristallzelle in einer einheitlichen Farbe. Diese farbstoffdotierten Zellen werden als ESTN (= Enhanced STN)-Zellen bezeichnet.

ESTN-Anzeigen werden z. B. vorteilhaft bei Punktmatrixdisplays mit hoher Multiplexrate eingesetzt. Diese Technologie eignet sich besonders für eine Durchleuchtung mit monochromatischen Lichtquellen. Vor allem wenn solche Displays in Kombination mit Flüssigkristallanzeigen anderer Technologien, z. B. in einem Kombinationsinstrument eines Kraftfahrzeugs, eingesetzt werden, ergeben sich bei starkem Auflicht, wie es z. B. durch starke Sonneneinstrahlung hervorgerufen werden kann, störende Farbunterschiede zwischen den Flüssigkristallanzeigen verschiedener Technologien.

Der Hintergrund von ESTN-Anzeigen erscheint dabei in der Farbe der der Flüssigkristallsubstanz zugesetzten Farbstoffmoleküle, wohingegen Flüssigkristallanzeigen anderer Technologie in der Regel einen grauen Anzeigehintergrund auch bei starkem Auflicht besitzen.

Um hier Abhilfe zu schaffen, liegt der Erfindung die Aufgabe zugrunde, eine Anzeigeeinrichtung mit einer durchleuchtbaren, farbstoffdotierten STN-Flüssigkristallzelle zu schaffen, in welcher Anzeigeeinrichtung sich die Farbe des Anzeigehintergrundes der STN-Zelle auch bei starkem Auflicht nicht von der Farbe des Anzeigehintergrundes anderer in der Anzeigeeinrichtung vorhandener Flüssigkristallzellen unterscheidet.

Diese Aufgabe wird erfindungsgemäß dadurch gelöst, daß das optische Element ein Farbfilter ist und derart mit einem Farbstoff versehen ist, daß auf die Flüssigkristallzelle beobachterseitig einfallendes Licht so von dem Farbstoff der Flüssigkristallzelle in einer ersten und von dem Farbstoff des Farbfilters in einer zweiten Farbe reflektiert wird, daß das Mischlicht aus den jeweils reflektierten Lichtanteilen eine von der ersten und von der zweiten Farbe verschiedene dritte Farbe aufweist. Aufgrund einer solchen Ausbildung kann sowohl die Farbe des Hintergrundes einer ESTN-Flüssigkristallzelle bei starkem von außen einfallenden Licht in weiten Grenzen beliebig festgelegt werden, als auch diese Hintergrundfarbe der Umgebung der Zelle angepaßt werden.

Die Erfindung ist besonders dann vorteilhaft einsetzbar, wenn durch die Flüssigkristallzelle helle Zeichen auf dunklem Anzeigegrund darstellbar sind, so daß die Dunkelfärbung eine besonders große Fläche in Anspruch nimmt und daher auch der störende Effekt von Farbänderungen und -ungleichheiten besonders in Auge fällt. Dieses ist insbesondere bei als Punktmatrixzelle ausgebildeten Flüssigkristallzellen der Fall.

Eine besonders deutliche und auch bei geringem Umgebungslicht gut ablesbare Anzeige kann dadurch erreicht werden, daß auf der der Flüssigkristallzelle abgewandten Seite des Farbfilters eine Lichtquelle angeordnet ist. Günstig ist es dabei, wenn von der Lichtquelle monochromatisches Licht ausstrahlbar ist. Die Farbe des ausgestrahlten Lichts kann in Abhängigkeit von der Ablesbarkeit der Anzeige, unter gestalterischen Gesichtspunkten oder z. B. auch im Hinblick auf eine möglichst große Signalwirkung der Anzeige gewählt werden.

Solche, eine Flüssigkristallanzeige von der Rückseite her transmissiv durchleuchtenden Lichtquellen haben den unerwünschten Nebeneffekt, daß in den den Lichtquellen gegenüberliegenden Bereichen der Anzeigefläche Lichtflecke wahrnehmbar sind. Um eine möglichst gleichmäßige Beleuchtung zu erreichen, ist es von Vorteil, wenn auf der dem Beobachter abgewandten Seite der Flüssigkristallzelle eine Streuscheibe angeordnet ist, die das Licht der Lichtquelle vergleichmäßigt. Besonders günstig ist es, wenn die Streuscheibe zwischen Lichtquelle und Farbfilter angeordnet ist. Jedes in einen optischen Strahlengang eingefügte optische Element führt zu einer Schwächung der Lichtintensität. Somit ist es von Vorteil, wenn auf die Flüssigkristallzelle beobachterseitig einfallendes und die Zelle durchstrahlendes Licht unmittelbar auf den Farbfilter trifft und nicht durch eine zwischengeschaltete Streuscheibe geschwächt wird. Auf diese Weise wird die erfindungsgemäße Mischwirkung bestmöglich verwirklicht.

Besonders vorteilhaft ist eine Ausführungsform, bei der der Farbfilter eine Streuscheibe ist. Damit ist es möglich, eine besonders kompakte Anzeigeeinrichtung mit einer geringen Bautiefe und wenigen Bauteilen zu verwirklichen.

Vorzugsweise ist auf der der Flüssigkristallzelle abgewandten Seite des Farbfilters ein Reflektor angeordnet. Dieser Reflektor dient der Lichtführung und -vergleichmäßigung des von den Lichtquellen in Richtung der Flüssigkristallzelle ausgesandten Lichts. Es ist wichtig, möglichst viel Licht der Lichtquellen effektiv zu nutzen, um die Lichtquellen möglichst klein und ihre Anzahl gering halten zu können. Einer Erhöhung der Anzahl der Lichtquellen oder dem Einsatz von stärkeren Lichtquellen steht ein hoher Platzbedarf, eine unzulässig hohe Wärmeerzeugung und höhere Kosten entgegen.

Der Reflektor kann aber auch dazu dienen, von außen auf die Anzeigeeinrichtung einfallendes Licht hinter der Flüssigkristallzelle zu reflektieren und so den Beleuchtungseffekt in einer Anzeigefläche der Zelle zusätzlich zu dem von Lichtquellen ausgestrahlten Licht zu verstärken oder aber - bei Einsatz der Anzeigeeinrichtung ausschließlich in heller Umgebung - die Lichtquellen ganz überflüssig zu machen.

Eine Fertigung des Farbfilters ist besonders einfach und wenig aufwendig, wenn dieser eine farbig transparente Bedruckung oder Beschichtung oder eine Einfärbung mit Farbstoff aufweist. Dabei kann der Farbfilter z. B. starr sein oder aus einer flexiblen Folie, die beispielsweise bereits bei ihrer Herstellung eingefärbt worden ist, bestehen.

Vorzugsweise ist der Farbstoff des Farbfilters fluoreszierend. Eine fluoreszierende Wirkung des Farbstoffs führt zu einer erheblichen Leuchtkraftverstärkung. Im Interesse einer möglichst hohen Lichtausbeute ist es von besonderem Vorteil, wenn der Farbstoff so gewählt wird, daß die Beleuchtungsintensität der Flüssigkristallzelle möglichst nicht vermindert wird. Günstig ist es, wenn der Farbfilter eine theoretische Lichtdurchlässigkeit von mindestens 80 % aufweist. Da ein grauer Anzeigehintergrund als besonders angenehm und neutral empfunden wird, weist das Mischlicht aus den jeweils von dem Farbstoff der Flüssigkristallzelle und von dem Farbstoff des Farbfilters reflektierten Lichtanteilen bei in etwa weißer oder in etwa gelber Farbe des einfallenden Lichts vorteilhaft eine in etwa graue Farbe auf. So wird der erfindungsgemäße Effekt auch bei dem wichtigen Fall auf die Flüssigkristallzelle auftreffenden Sonnenlichts erzielt. Für einen grauen Hintergrund spricht neben der neutralen Wirkung zudem, daß ein solcher Hintergrund bei herkömmlichen Flüssigkristallzellen üblich ist und auf diese Weise ein einheitliches Erscheinungsbild gewährleistet wird.

Die Ablesbarkeit der Anzeige und deren optisches Erscheinungsbild wird besonders positiv beeinflußt, wenn von der Lichtquelle in etwa rotes oder in etwa gelbes Licht ausstrahlbar ist. Vorteilhaft ist es zudem, wenn die Farbe des Farbstoffs der Flüssigkristallzelle in etwa blau und die Farbe des Farbstoffs des Farbfilters in etwa orange ist. Auf diese Weise wird der Wunsch nach einem dunklen Anzeigehintergrund in nicht angesteuerten Bereichen sowie einer hohen Lichtdurchlässigkeit des Farbfilters bei einer Anzeigeeinrichtung gemäß der Erfindung besonders gut verwirklicht.

Die Ansteuerung einer Flüssigkristallzelle in einer Anzeigeeinrichtung nach der Erfindung wird in erheblichem Maße vereinfacht, wenn die Flüssigkristallzelle in einem Multiplexverfahren ansteuerbar ist. Insbesondere bei einer Punktmatrixzelle ist dieses Ansteuerverfahren aufgrund der großen Anzahl einzelner Anzeigebereiche sehr vorteilhaft anwendbar.

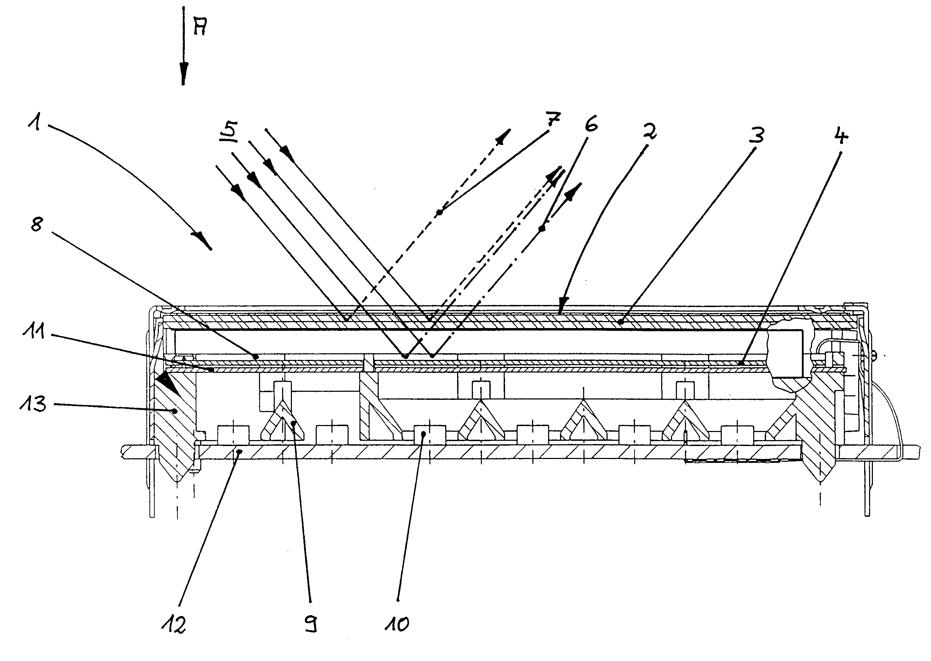

Die Erfindung wird im folgenden anhand eines in der beigefügten Zeichnung dargestellten Ausführungsbeispiels näher erläutert. Die einzige Figur zeigt eine erfindungsgemäße Anzeigeeinrichtung in einer geschnittenen Darstellung.

Eine eine Flüssigkristallzelle 2 aufweisende Anzeigeeinrichtung 1 wird von einer Leiterplatte 12 gehalten. Auf der Leiterplatte 12 sind Lichtquellen 10 und ein die Flüssigkristallanzeige aufnehmendes Gehäuse 13 angeordnet.

Die in dem Gehäuse 13 befestigte Flüssigkristallzelle 2 dient einer Darstellung von Informationen und bildet den frontseitigen Abschluß der Flüssigkristallanzeige. Die Flüssigkristallzelle 2 ist von den Lichtquellen 10 durchleuchtbar.

Von den Lichtquellen 10 ausgestrahltes Licht wird durch Reflektoren 9 in Richtung auf die Flüssigkristallzelle 2 geführt und vergleichmäßigt. Zwischen Flüssigkristallzelle 2 und Lichtquellen 10 ist eine ebenfalls der Vergleichmäßigung des von den Lichtquellen 10 ausgesandten Lichts dienende Streuscheibe 11 und ein Farbfilter 4 angeordnet.

Der Farbfilter 4 ist frontseitig, d. h. entgegen einer Beobachtungsrichtung A, mit einem Farbdruck 8 versehen. Eine in der Flüssigkristallzelle 2 enthaltene Flüssigkristallsubstanz 3 ist eingefärbt, um eine vom Beobachtungswinkel unabhängige Färbung der als STN-Zelle ausgebildeten Flüssigkristallzelle 2 zu erhalten. Der Farbdruck 8 des Farbfilters 4 ist z. B. von oranger Farbe und zur Verstärkung der Leuchtkraft fluoreszierend, und die Flüssigkristallsubstanz 3 in der Flüssigkristallzelle 2 ist z. B. blau eingefärbt. Die Lichtquellen 10 strahlen monochromatisches, z. B. rotes Licht ab.

Auf die Anzeigeeinrichtung 1 einfallendes Auflicht 5, z. B. Sonnenlicht, von weiß-gelber Farbe wird sowohl an dem Farbstoff der Flüssigkristallsubstanz 3 als auch an dem Farbdruck 8 des Farbfilters 4 reflektiert. Sonnenlicht, das durch die Anzeige auf die fluoreszierende Farbe der Bedruckung 8 fällt, wird hieran reflektiert und gleichzeitig durch die Eigenschaft der fluoreszierenden orangen Farbe zu einer höheren Wellenlänge hin verschoben. Dieses mit 6 bezeichnete reflektierte Licht mischt sich mit dem am blauen Farbstoff der Flüssigkristallsubstanz 3 gestreuten blauen Licht, hier mit 7 bezeichnet, zu einem neutral grauen Erscheinungsbild.

Werden anstelle der Lichtquellen 10 vergrößerte Reflektoren 9 vorgesehen, die durch eine Reflexion des von vorne auf sie auftreffenden Umgebungslichts die Flüssigkristallzelle 2 durchleuchten, so funktioniert die Vorrichtung entsprechend. Insbesondere bei einem solchen Anwendungsfall ist es von Vorteil, wenn der Farbfilter 4 von oranger Farbe ist. Orange besitzt eine besonders hohe Lichtdurchlässigkeit, die vor allem in reflektiv, d. h. ohne eine aktive Lichtquelle, betriebenen Flüssigkristallzellen erforderlich ist, um auch bei schwächerem Umgebungslicht mit der Flüssigkristallanzeige noch Informationen sichtbar machen zu können. Davon unabhängig ist die Farbe des Farbfilters so zu wählen, daß das von Filter und Flüssigkristallsubstanz reflektierte Mischlicht einen gewünschten Farbton besitzt.

## Patentansprüche

1. Anzeigeeinrichtung mit einer durchleuchtbaren STN-Flüssigkristallzelle, deren Flüssigkristallsubstanz einen Farbstoff enthält und die in Anzeigebereichen bezüglich ihres Transmissionsvermögens schaltbar ist, und mit einem auf der einem Beobachter abgewandten Seite der Flüssigkristallzelle angeordneten optischen Element, dadurch gekennzeichnet, daß das optische Element ein Farbfilter (4) ist und derart mit einem Farbstoff versehen ist, daß auf die Flüssigkristallzelle (2) beobachterseitig einfallendes Licht (5) so von dem Farbstoff der Flüssigkristallzelle (2) in einer ersten und von dem Farbstoff des Farbfilters (4) in einer zweiten Farbe reflektiert wird, daß das Mischlicht aus den jeweils reflektierten Lichtanteilen eine von der ersten und von der zweiten Farbe verschiedene dritte Farbe aufweist.

2. Anzeigeeinrichtung nach Anspruch 1, dadurch gekennzeichnet, daß durch die Flüssigkristallzelle (2) helle Zeichen auf dunklem Anzeigegrund darstellbar sind.

3. Anzeigeeinrichtung nach Anspruch 1 oder 2, dadurch gekennzeichnet, daß die Flüssigkristallzelle (2) eine Punktmatrixzelle ist.

4. Anzeigeeinrichtung nach einem der vorhergehenden Ansprüche, dadurch gekennzeichnet, daß auf der der Flüssigkristallzelle (2) abgewandten Seite des Farbfilters (4) eine Lichtquelle (10) angeordnet ist.

5. Anzeigeeinrichtung nach Anspruch 4, dadurch gekennzeichnet, daß von der Lichtquelle (10) monochromatisches Licht ausstrahlbar ist.

6. Anzeigeeinrichtung nach einem der vorhergehenden Ansprüche, dadurch gekennzeichnet, daß auf der dem Beobachter abgewandten Seite der Flüssigkristallzelle (2) eine Streuscheibe (11) angeordnet ist.

7. Anzeigeeinrichtung nach Anspruch 6 und 4 oder 5, dadurch gekennzeichnet, daß die Streuscheibe (11) zwischen Lichtquelle (10) und Farbfilter (4) angeordnet ist.

8. Anzeigeeinrichtung nach einem der Ansprüche 1 bis 6, dadurch gekennzeichnet, daß der Farbfilter (4) eine Streuscheibe ist.

9. Anzeigeeinrichtung nach einem der vorhergehenden Ansprüche, dadurch gekennzeichnet, daß auf der der Flüssigkristallzelle (2) abgewandten Seite des Farbfilters (4) ein Reflektor (9) angeordnet ist.

10. Anzeigeeinrichtung nach einem der vorhergehenden Ansprüche, dadurch gekennzeichnet, daß der Farbfilter (4) eine farbig transparente Bedruckung oder Beschichtung oder eine Einfärbung mit Farbstoff aufweist.

11. Anzeigeeinrichtung nach einem der vorhergehenden Ansprüche, dadurch gekennzeichnet, daß der Farbstoff des Farbfilters (4) fluoreszierend ist.

12. Anzeigeeinrichtung nach einem der vorhergehenden Ansprüche, dadurch gekennzeichnet, daß der Farbfilter (4) eine theoretische Lichtdurchlässigkeit von mindestens 80 % aufweist.

13. Anzeigeeinrichtung nach einem der vorhergehenden Ansprüche, dadurch gekennzeichnet, daß das Mischlicht aus den jeweils von dem Farbstoff der Flüssigkristallzelle (2) und von dem Farbstoff des Farbfilters (4) reflektierten Lichtanteilen bei in etwa weißer oder in etwa gelber Farbe des einfallenden Lichts eine in etwa graue Farbe aufweist.

14. Anzeigeeinrichtung nach einem der vorhergehenden Ansprüche, dadurch gekennzeichnet, daß die Farbe des Farbstoffs der Flüssigkristallzelle (2) in etwa blau und die Farbe des Farbstoffs des Farbfilters (4) in etwa orange ist.

15. Anzeigeeinrichtung nach einem der Ansprüche 4 bis 14, dadurch gekennzeichnet, daß von der Lichtquelle (10) in etwa rotes oder in etwa gelbes Licht ausstrahlbar ist.

16. Anzeigeeinrichtung nach einem der vorhergehenden Ansprüche, dadurch gekennzeichnet, daß die Flüssigkristallzelle (2) in einem Multiplexverfahren ansteuerbar ist.
